(19) **Europäisches Patentamt**
**European Patent Office**
**Office européen des brevets**

(11) **EP 1 638 339 B1**

(12) **EUROPEAN PATENT SPECIFICATION**

(45) Date of publication and mention
of the grant of the patent:
**13.08.2008 Bulletin 2008/33**

(51) Int Cl.:
*H04N 7/26* (2006.01)     *H04N 7/01* (2006.01)

(21) Application number: **05108572.8**

(22) Date of filing: **16.09.2005**

(54) **Motion estimation**

Bewegungsschätzung.

Estimation de mouvement.

(84) Designated Contracting States:
**DE GB NL**

(30) Priority: **18.09.2004 KR 2004074823**

(43) Date of publication of application:
**22.03.2006 Bulletin 2006/12**

(73) Proprietor: **SAMSUNG ELECTRONICS CO., LTD.**
**Suwon-si,**
**Gyeonggi-do (KR)**

(72) Inventors:
• **Ha, Tae-hyeun**
**Yeongtong-gu**
**Suwon-si**
**Gyeonggi-do (KR)**
• **Kim, Jae-seok**
**646 Shindorim-dong**
**Guro-gu**
**Seoul (KR)**

(74) Representative: **Piotrowicz, Pawel Jan Andrzej et al**
**Venner Shipley LLP**
**Byron House**
**Cambridge Business Park**
**Cowley Road**
**Cambridge CB4 0WZ (GB)**

(56) References cited:
FR-A1- 2 844 131        US-A- 5 210 605
US-A- 5 398 068

• BEDE LIU ET AL: "NEW FAST ALGORITHMS FOR THE ESTIMATION OF BLOCK MOTION VECTORS" IEEE TRANSACTIONS ON CIRCUITS AND SYSTEMS FOR VIDEO TECHNOLOGY, IEEE SERVICE CENTER, PISCATAWAY, NJ, US, vol. 3, no. 2, 1 April 1993 (1993-04-01), pages 148-157, XP000367179 ISSN: 1051-8215
• MOSCHETTI FULVIO; KUNT MURAT ; DEBES ERIC: "A Statistical Adaptive Block-Matching Motion Estimation" IEEE TRANSACTIONS ON CIRCUITS AND SYSTEMS FOR VIDEO TECHNOLOGY, vol. 13, no. 4, 1 April 2003 (2003-04-01), pages 417-431, XP002357611
• [Online] XP002357612 Retrieved from the Internet: URL:http://en.wikipedia.org/wiki/ Bilinear_ interpolation> [retrieved on 2005-12-05]
• JEONGNAM YOUN ET AL: "A fast motion vector composition method for temporal transcoding" CIRCUITS AND SYSTEMS, 1999. ISCAS '99. PROCEEDINGS OF THE 1999 IEEE INTERNATIONAL SYMPOSIUM ON ORLANDO, FL, USA 30 MAY-2 JUNE 1999, PISCATAWAY, NJ, USA,IEEE, US, 30 May 1999 (1999-05-30), pages 243-246, XP010341235 ISBN: 0-7803-5471-0

EP 1 638 339 B1

**Description**

The present invention relates to motion estimation.

Typically, personal computers (PC) or high-definition televisions (HDTV) perform frame rate conversion to be compatible with programs that follow various broadcasting standards such as the Phase Alternation Line (PAL) or the National Television System Committee (NTSC). Frame rate conversion is the act of changing the number of frames per second. In particular, it is necessary to interpolate a new frame when a frame rate increases. With recent advances in broadcasting technologies, frame rate conversion is performed after video data is compressed according to video compression standards such as Moving Picture Experts Group (MPEG) and H.263.

In the field of video processing, video signals usually have redundancies due to their high autocorrelation. Data compression efficiency can be improved by removing redundancies during data compression. Here, in order to efficiently compress a video frame that changes temporally, it is necessary to remove redundancies in the time-axis direction. In other words, by replacing a frame showing no movement or slight movement with a previous frame, the amount of data to be transmitted can be greatly reduced. Motion estimation (ME) is the act of searching for a block in a previous frame that is most similar to a block in a current frame. A motion vector (MV) indicates how much a block has moved.

Existing MV algorithms include a full-search block matching algorithm (FSBMA) and a fast search algorithm (FSA).

The FSBMA involves dividing consecutively input video into pixel blocks of a predetermined size and determining a location of a block in a previous or following frame that is most similar to each of the divided blocks as an MV. In other words, a relative distance between a block in an input frame and a block in a reference frame that is most similar to the block in the input frame is referred to as the MV.

In block-based motion estimation, a mean absolute difference (MAD), a mean square error (MSE), or a sum of absolute difference (SAD) is usually used to determine a similarity between adjacent blocks. Here, since the MAD does not require multiplication, it requires only a small amount of calculation and can be easily implemented in hardware. Therefore, the FSBMA using a MAD estimates a block having the minimum MAD for a block in a reference frame among blocks in a frame that is adjacent to the reference frame and obtains a motion vector between the block in the reference frame and the estimated block.

However, although the FSBMA is a simple and idealistically accurate MV algorithm, it requires a huge amount of calculation and therefore is not appropriate for real-time encoding.

Meanwhile, compared to the FSBMA, the FSA greatly reduces the amount of calculation at the cost of accuracy, and is appropriate for real-time video encoders (for example, video telephones, IMT-2000 terminals, video conference systems, etc.), in which video quality is relatively less important. Examples of the FSA include a hierarchical search block matching algorithm (HSBMA), a one-pixel greedy search (OPGS), a three-step search (TSS) algorithm, a diamond search algorithm, a four-step search (FSS) algorithm, and a gradient search algorithm.

Here, the HSBMA has high accuracy and is relatively less affected by the amount of motion, but involves a substantial amount of calculation and requires a memory for storing low-resolution frames. Also, the HSBMA requires a substantial amount of calculation both for a long-distance motion vector and a short-distance motion vector, without distinction.

The OPGS algorithm can find only an effective motion vector near a central point (or a starting point), may incorrectly converge on a local minimum point, may not obtain the correct result in a complex image having complex motion, and requires a substantial amount of calculation to find a motion vector over a long distance.

Specific examples of prior motion estimation methods are disclosed in the following documents. Liu, B. & Zaccarin, "New Fast algorithms for the Estimation of Block Motion Vectors", "I.E.E.E. Transactiosns on Circuits & Systems for Video Technology", 1993, vol. 3, no. 2, pp148-157, I.E.E.E., New York, U.S.A., discloses a method in which motion vectors are determined for a sample of blocks in a frame and allocated to remaining blocks. Moschetti, F. et al., "A Statistical Adaptive Block-Matching Motion Estimation", "I.E.E.E. Transactiosns on Circuits & Systems for Video Technology", 2003, vol. 13, no. 4, pp417-431, I.E.E.E., New York, U.S.A., discloses a method in which a mean motion vector is determined for an object and refined by performing a full search in an area according to the distribution of variances in the motion vectors. FR 2 844 131 discloses a frame conversion rate method that includes a two-stage motion estimation process in which a pixel block is assigned an initial motion vector selected from the motion vectors of neighbouring blocks. The motion vector for that pixel block is then refined by performing a second search within a fixed search area whose location is based on the initial motion vector.

The present invention seeks to provide a method of motion estimation.

According to the present invention, there is provided a method of motion estimation in a video compression system, the method comprising dividing a current frame into blocks and performing a full search algorithm on blocks sampled from the divided blocks, allocating a motion vector (iMV) obtained through linear interpolation to non-sampled blocks in the current frame based on motion vectors (fMV) obtained through performing the full search algorithm, and performing a fast search algorithm using the motion vector obtained through the linear interpolation as a search starting point, wherein a search area of the fast search algorithm is variably determined with reference to motion vectors of neighboring blocks that are nearest to a given block according to one of the following expressions:

$$SA = MAX\{\ |\ fMV(a)-iMV(i,j)\ |\ ,\ |\ fMV(b)-iMV(i,j)\ |\ ,\ |\ fMV(c)-iMV(i,j)\ |\ ,\ |\ fMV(d)-iMV(i,j)\ |\ \};$$

and

$$SA = MAX\{\ |\ iMV1-iMV(i,j)\ |\ ,\ |\ iMV2-iMV(i,j)\ |\ ,\ |\ iMV3-iMV(i,j)\ |\ ,\ |\ iMV4-iMV(i,j)\ |\ \};$$

where SA indicates the search area, (i,j) are spatial coordinates of pixels, iMV(i,j) is a motion vector obtained through the linear interpolation in the block and fMV(a) through fMV(d) are motion vectors obtained by performing the full search algorithm on sampled ones of the neighboring blocks and iMV1 through iMV4 are motion vectors of neighboring blocks obtained through the linear interpolation..

The method may be included in a method for converting a frame rate, which further comprises generating pixel values to be interpolated between an $n^{th}$ frame and an $(n-1)^{th}$ frame based on motion vectors that are estimated through the fast search algorithm and pixel values of blocks that are matched between the $n^{th}$ frame and the $(n-1)^{th}$ frame.

The invention also provides motion estimation apparatus comprising means for dividing a current frame into a plurality of blocks and performing a full search algorithm on sampled blocks of the plurality of blocks, means for allocating a motion vector obtained through linear interpolation to non-sampled blocks of the plurality of blocks in the current frame based on motion vectors obtained through the performing of the full search algorithm and means for performing a fast search algorithm using the motion vector obtained through the linear interpolation as a search starting point, said apparatus being arranged to determine the search area of the fast search algorithm variably, with reference to motion vectors of neighboring blocks that are nearest to a given block according to one of the following expressions:

$$SA = MAX\{\ |\ fMV(a)-iMV(i,j)\ |\ ,\ |\ fMV(b)-iMV(i,j)\ |\ ,\ |\ fMV(c)-iMV(i,j)\ |\ ,\ |\ fMV(d)-iMV(i,j)\ |\ \};$$

and

$$SA = MAX\{\ |\ iMV1-iMV(i,j)\ |\ ,\ |\ iMV2-iMV(i,j)\ |\ ,\ |\ iMV3-iMV(i,j)\ |\ ,\ |\ iMV4-iMV(i,j)\ |\ \};$$

where SA indicates the search area, (i,j) are spatial coordinates of pixels, iMV(i,j) is a motion vector obtained through the linear interpolation in the block and fMV(a) through fMV(d) are motion vectors obtained by performing the full search algorithm on sampled ones of the neighboring blocks and iMV1 through iMV4 are motion vectors of neighboring blocks obtained through the linear interpolation.

The invention also provides an apparatus for converting a frame rate, comprising a frame buffer configured to store an input video on a frame-by-frame basis, said motion estimation apparatus, configured to perform motion estimation for a current frame that is stored in the frame buffer, and a motion compensated interpolation unit configured to generate pixel values to be interpolated between frames based on motion vectors estimated by the motion estimation apparatus.

Further features and advantages will be apparent from claims 2 to 5.

Embodiments of the present invention will now be described, by way of example, with reference to the accompanying drawings in which:

Figure 1 is a flowchart illustrating a method for motion estimation based on hybrid block matching according to an exemplary embodiment of the present invention;

Figure 2 illustrates full-search motion vector estimation for sampled blocks of Figure 1;

Figure 3 illustrates motion estimation using overlapping blocks of Figure 1;

Figure 4A illustrates a motion estimation (ME) block composed of sampled pixels of Figure 1;

Figure 4B illustrates a motion compensated interpolation (MCI) block;

Figure 5 illustrates motion vector allocation to a non-sampled block using bilinear interpolation of Figure 1;

Figure 6 illustrates a motion vector calculated using bilinear interpolation of Figure 1;

Figure 7 illustrates neighbouring blocks that define a search area for an arbitrary block of Figure 1;

Figure 8 is a conceptual diagram of a fast search algorithm that starts with the motion vector allocated to the non-sampled block of Figure 1; and

Figure 9 is a block diagram of an apparatus for converting a frame rate according to an exemplary embodiment of the present invention.

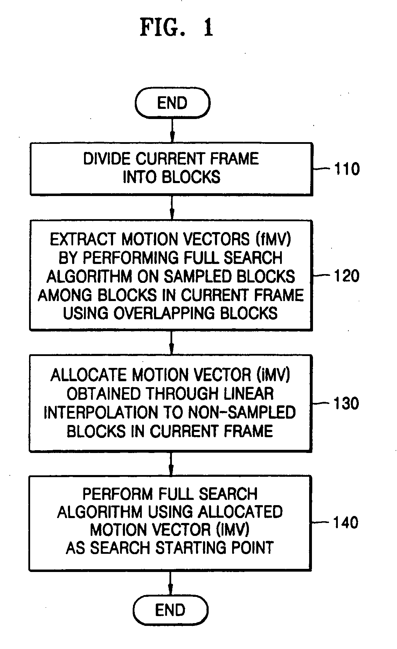

Figure 1 is a flowchart illustrating a method for motion estimation based on hybrid block matching according to an exemplary embodiment of the present invention.

The present invention utilizes the fact that a motion vector of a block in a current frame and motion vectors of its neighbouring blocks have the same or similar characteristics between two temporally neighbouring frames.

In a first operation 110, a video signal that is being currently input on a frame-by-frame basis is divided into blocks. Then, specific blocks are sampled from among the divided blocks at predetermined intervals. Thus, the entire block is divided into sampled blocks that are subject to full searching and non-sampled blocks that are not subject to full searching.

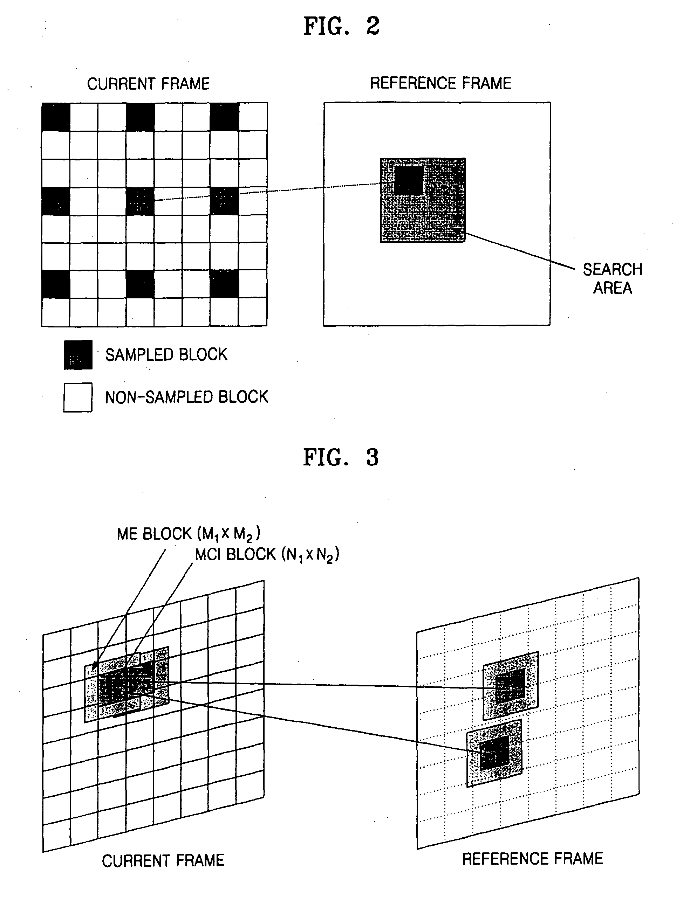

In operation 120, a full-search algorithm is performed on the sampled blocks in a current frame using overlapping blocks. Referring to Figure 2, MADs between the sampled block in the current frame and reference blocks in a search area of a reference frame are calculated and coordinates (x,y) of a location having the minimum MAD are decided to be a motion vector.

For example, when an $(n-1)^{th}$ frame $F_{n-1}$ and an $n^{th}$ frame $F_n$ are given, MADs between a block in a current frame ($F_{n-1}$) and reference blocks in a search area of a previous frame ($F_n$) are calculated as shown in Equations 1 and 2, and a spatial distance between a block having the minimum MAD and the block in the current frame ($F_{n-1}$) is decided as a motion vector. First, the MADs are calculated as follows:

$$MAD_{(k,l)}(\chi,\gamma) = \sum_{i=1}^{N_1} \sum_{j=1}^{N_2} \frac{\left|f_{n-1}(k+i+\chi,l+j+y) - f_n(k+i,l+j)\right|}{N_1 \times N_2}$$

(1)

where n is a variable indicating an order of input frames in a time domain, (i,j) are spatial coordinates of pixels, (x,y) indicate a distance between two matched blocks, (k,l) are spatial coordinates of two blocks composed of $N_1$ x $N_2$ pixels, and $N_1$ and $N_2$ are horizontal and vertical dimensions of each of the two matched blocks.

The motion vector of the block having the minimum MAD in a motion estimation area is obtained as follows:

$$(\chi_m,\gamma_m)_{(k,l)} = \underset{(\chi,\gamma)\in S}{\arg\min} \left\{MAD_{(k,l)}(\chi,\gamma)\right\}$$

(2)

where S is a search range for motion estimation and ($x_m$, $y_m$) represent the motion vector of the block having the minimum MAD.

At this time, the full-search algorithm generally uses standard-compliant blocks like MPEG 1 /2-compliant blocks, but may use overlapping blocks as shown in Figure 3.

In other words, pixels in a frame are divided into motion compensated interpolation (MCI) blocks of $N_1$ x $N_2$ pixels and motion estimation (ME) blocks of $M_1$ x $M_2$ pixels that have the same central axis as the MCI blocks and are larger than the MCI blocks. For example, the ME block size may be 32 x 32 and the MCI block size may be 16 x 16. Also, an $M_1$ x $M_2$ ME block is spaced apart from its neighbouring blocks (which are located on the left side, the right side, above, and below the $M_1$ x $M_2$ ME block) horizontally by $N_1$ and vertically by $N_2$. Thus, the $M_1$ x $M_2$ ME block overlaps its neighbouring blocks. Pixels in an ME block are sub-sampled 1:2 or less.

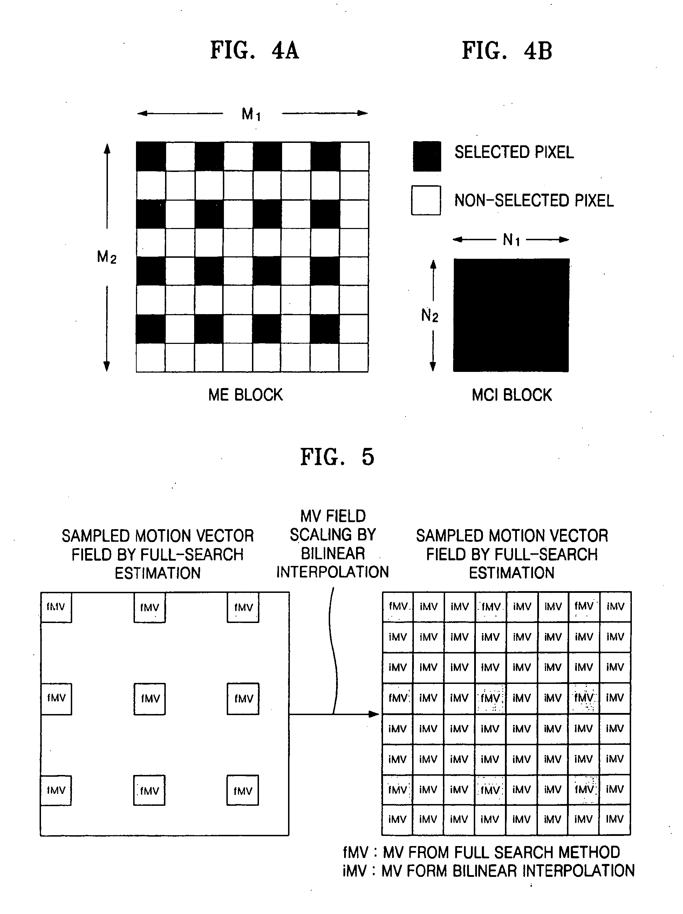

Figure 4A illustrates an $M_1$ x $M_2$ ME block in which pixels are sub-sampled 1:2 and selected pixels and non-selected pixels are divided, and Figure 4B illustrates an $N_1$ x $N_2$ MCI block. Thus, the full-search algorithm performs motion estimation on an $M_1$ x $M_2$ ME block using an overlapping MCI block that is smaller than the $M_1$ x $M_2$ ME block.
Thus, the MAD using the sampled ME block can be expressed as follows:

$$MAD_{(K,l)}(\chi,\gamma) = \sum_{i=1}^{[M_1/a]} \sum_{j=1}^{[M_2/a]} \frac{a^2 |f_{n-1}(k+ai+x,l+aj+y) - f_n(k+ai,l+a|}{M_1 \times M_2}$$

$$(3)$$

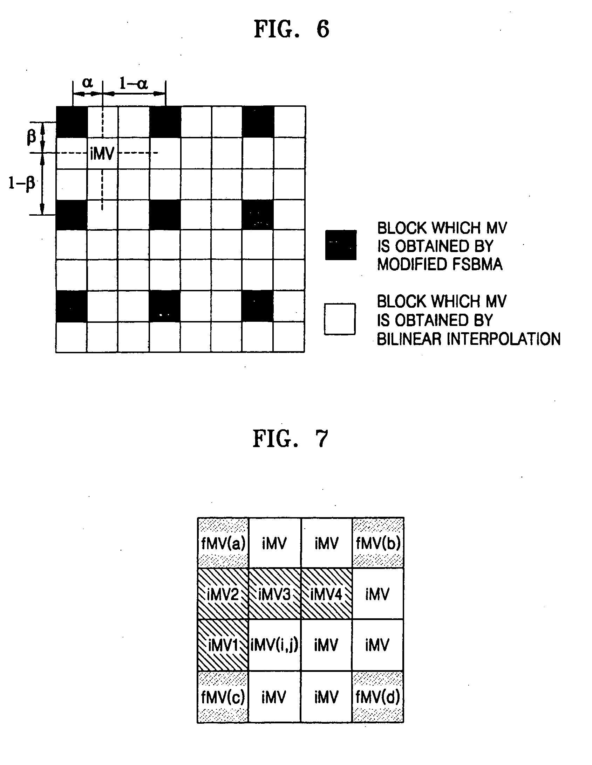

where $\alpha$ is a sampling coefficient for sampling pixels in an ME block, $[M/\alpha]$ is the largest integer that is not greater than $M/\alpha$, $M_1$ x $M_2$ is an ME block size, and $M_1$ and $M_2$ are set greater than $N_1$ and $N_2$ of Equation 1.
Next, in operation 130, a motion vector iMV obtained through bilinear interpolation is allocated to the non-sampled blocks in the current frame using a motion vector fMV obtained through a full search as shown in Figure 5. Using the fact that a motion vector of a block in a current frame and motion vectors of its neighbouring blocks have the same or similar characteristics between two temporally neighbouring frames, bilinear interpolation for the non-sampled blocks in Figure 6 can be expressed as follows:

$$iMV = (1-\beta)[(1-\alpha)fMV_1 + \alpha fMV_2] + \beta[(1-\alpha)fMV_3 + \alpha fMV_4] \qquad (4)$$

where $fMV_{1-4}$ indicates motion vectors of four nearest blocks, which are obtained through a full search, and $\alpha$ and $\beta$ are horizontal and vertical rational constants between fMV and iMV.
In operation 140, a fast search algorithm is performed using the motion vector iMV obtained through bilinear interpolation as a search starting point. Also, instead of the fast search algorithm, a fine search algorithm that estimates a motion vector by performing a full search in a small range, e.g., a range of $\pm 2$ or $\pm 4$, may be used. Examples of the fast search algorithm include an HSBMA, an OPGS, a TSS algorithm, a diamond algorithm, an FSS algorithm, and a gradient search algorithm.
At this time, a search area for the fast search is variably determined with reference to motion vectors of neighbouring blocks that are nearest to a corresponding block or motion vectors of neighbouring blocks of the corresponding block that are obtained through a full search algorithm. In other words, as shown in Figure 7, a search starting point for an ME block iMV(i,j) whose coordinates are (i,j) is a given initial value. Based on the given initial value, a search area (SA) is determined using motion vectors of neighbouring blocks by one of the following methods:

1) SA = MAX{ | fMV(a)-iMV(i,j) | , | fMV(b)-iMV(i,j) | , | fMV(c)-iMV(i,j) |, | fMV(d)-iMV(i,j) |}, where fMV(a) through fMV(d) indicate motion vectors of neighbouring blocks of a block iMV(i,j) that are obtained in an early stage.

2) SA = MAX{ | iMV1-iMV(i,j) |,| iMV2-iMV(i,j) |, | iMV3-iMV(i,j) |, | iMV4-iMV(i,j) | }, where iMV1 through iMV4 indicate motion vectors of blocks that are located on the left side, the upper left side, above, and on the upper right side of the block iMV(i,j).

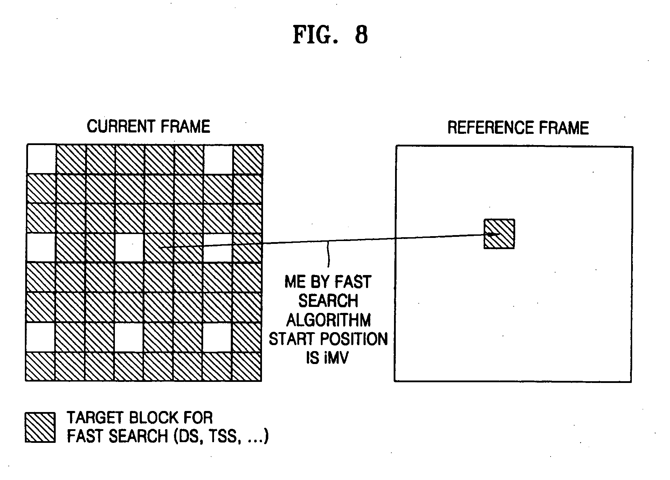

As shown in Figure 8, a fast search algorithm is performed to determine a location at which a target block in a current block and a block in a reference frame are matched. For example, a local minimum point of a search area in the reference frame is searched using a motion vector iMV obtained through bilinear interpolation for a block in the current frame as a search starting point. Then, if the local minimum point is found, searching is stopped and a location of the local minimum point is determined as a motion vector for the block in the current frame.

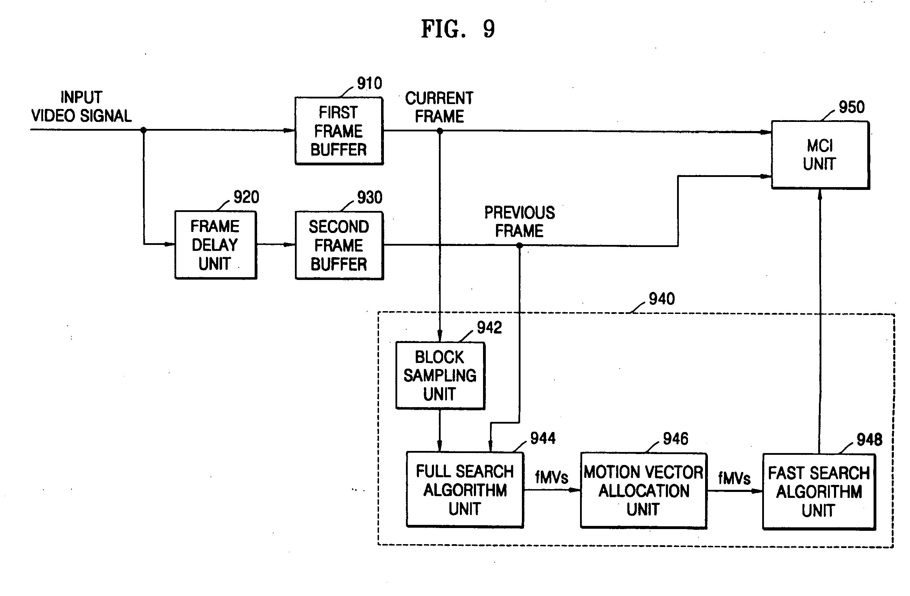

Figure 9 is a block diagram of an apparatus for converting a frame rate using the method for motion estimation based on hybrid block matching according to an exemplary embodiment of the present invention.
The frame rate converter of Figure 9 includes a first frame buffer 910, a frame delay unit 920, a second frame buffer 930, a hybrid motion estimation unit 940, and a motion compensated interpolation (MCI) unit 950. The hybrid motion estimation unit 940 includes a block sampling unit 942, a full-search algorithm unit 944, a motion vector allocation unit 946, and a fast search algorithm unit 948.
Referring to Figure 5, the first frame buffer 910 stores an input video signal on a frame-by-frame basis. For example, a video signal of an $n^{th}$ frame is stored in the first frame buffer 910. A video signal that is delayed by one frame in the frame delay unit 920 is stored in the second frame buffer 930. For example, an $(n-1)^{th}$ frame is stored in the second frame buffer 930.

The hybrid motion estimation unit 940 extracts motion vectors of all possible blocks using a hybrid search algorithm between the $n^{th}$ frame and the $(n-1)^{th}$ frame. In other words, the block sampling unit 942 samples some of the blocks in the $n^{th}$ frame. The full search algorithm unit 944 estimates motion vectors fMV by performing a full search algorithm between the sampled blocks of the $n^{th}$ frame and blocks of the $(n-1)^{th}$ frame. The motion vector allocation unit 946 performs bilinear interpolation based on the motion vectors fMV obtained by the full search algorithm unit 944 and allocates the motion vector iMV obtained through bilinear interpolation to the non-sampled blocks. The fast search algorithm unit 948 performs a fast search algorithm using the motion vector iMV allocated to the non-sampled blocks as a search starting point.

The MCI unit 950 performs motion compensation by applying the motion vectors fMV and iMV that are estimated by the hybrid motion estimation unit 940 to the blocks of the $n^{th}$ frame and the $(n-1)^{th}$ frame that are stored in the first and frame buffer 910 and the second frame buffer 930 and generates pixel values to be interpolated between the $n^{th}$ frame and the $(n-1)^{th}$ frame based on the estimated motion vectors fMV and iMV and pixel values of blocks that are matched between the $n^{th}$ frame and the $(n-1)^{th}$ frame.

As described above, according to the present invention, by combining a modified full search algorithm and a fast search algorithm, it is possible to perform a fast search and improve compression efficiency by searching for a global minimum point. In particular, by using the modified full search algorithm, the amount of initial motion estimation is reduced and the actual performance of motion estimation can be enhanced. Also, by using a modified search area in the fast search algorithm, the speed of search can be improved.

Meanwhile, the present invention can also be embodied as a computer-readable code on a computer-readable recording medium. The computer-readable recording medium is any data storage device that can store data which can be thereafter read by a computer system. Examples of computer-readable recording media include read-only memory (ROM), random-access memory (RAM), CD-ROMs, magnetic tapes, floppy disks, optical data storage devices, and carrier waves. The computer-readable recording medium can also be distributed over network of coupled computer systems so that the computer-readable code is stored and executed in a decentralized fashion.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

1. A method for motion estimation in a video compression system, the method comprising:

dividing a current frame into a plurality of blocks and performing a full search algorithm on sampled blocks of the plurality of blocks; and
allocating a motion vector obtained through linear interpolation to non-sampled blocks of the plurality of blocks in the current frame based on motion vectors obtained through the performing of the full search algorithm;
performing a fast search algorithm using the motion vector obtained through the linear interpolation as a search starting point;
**characterized in that** search area of the fast search algorithm is variably determined with reference to motion vectors of neighboring blocks that are nearest to a given block according to one of the following expressions:

$$SA = MAX\{\ |\ fMV(a)\text{-}iMV(i,j)\ |\ ,\ |\ fMV(b)\text{-}iMV(i,j)\ |\ ,\ |\ fMV(c)\text{-}iMV(i,j)\ |\ ,\ |\ fMV(d)\text{-}iMV(i,j)\ |\ \};$$

and

$$SA = MAX\{\ |\ iMV1\text{-}iMV(i,j)\ |\ ,\ |\ iMV2\text{-}iMV(i,j)\ |\ ,\ |\ iMV3\text{-}iMV(i,j)\ |\ ,\ |\ iMV4\text{-}iMV(i,j)\ |\ \};$$

where SA indicates the search area, (i,j) are spatial coordinates of pixels, iMV(i,j) is a motion vector obtained through the linear interpolation in the block and fMV(a) through fMV(d) are motion vectors obtained by performing the full search algorithm on sampled ones of the neighboring blocks and iMV1 through iMV4 are motion vectors of neighboring blocks obtained through the linear interpolation.

2. The method of claim 1, wherein the performing of the full search algorithm comprises calculating mean absolute differences between the sampled blocks in the current frame and reference blocks in a search area of a reference frame and determining coordinates of a location having a minimum MAD to be a motion vector.

3. The method of claim 1, wherein in the performing of the full search algorithm, the sampled blocks in the current frame have a size of $M_1 \times M_2$ pixels and overlap with interpolation blocks having a size of $N_1 \times N_2$ pixels, pixels in the sampled blocks of $M_1 \times M_2$ pixels are sampled, and $M_1$ and $M_2$ are larger than $N_1$ and $N_2$.

4. The method of claim 1, wherein:

$$iMV = (1-\beta)[(1-\alpha)fMV_1 + \alpha fMV_2] + \beta[(1-\alpha)fMV_3 + \alpha fMV_4]$$

where iMV indicates the motion vector obtained through linear interpolation, $fMV_{1-4}$ indicates motion vectors of four nearest blocks that are obtained through a full search, $\alpha$ and $\beta$ are horizontal and vertical rational constants between the motion vector obtained through the linear interpolation and the motion vectors obtained through the full search.

5. The method of claim 1, wherein the performing of the fast search algorithm comprises searching for a local minimum point in a search area of a reference frame using the motion vector obtained through the linear interpolation on a block in the current frame as the search starting point, stopping the search if the local minimum point is found, and deciding the local minimum point as a motion vector of the block in the current frame.

6. A method for converting a frame rate, the method comprising:

a method for motion estimating according to claim 1; and
generating pixel values to be interpolated between an $n^{th}$ frame and an $(n-1)^{th}$ frame based on motion vectors that are estimated through the fast search algorithm and pixel values of blocks that are matched between the $n^{th}$ frame and the $(n-1)^{th}$ frame.

7. Motion estimation apparatus comprising:

means (942) for dividing a current frame into a plurality of blocks and performing a full search algorithm on sampled blocks of the plurality of blocks; and
means (946) for allocating a motion vector obtained through linear interpolation to non-sampled blocks of the plurality of blocks in the current frame based on motion vectors obtained through the performing of the full search algorithm;
means (948) for performing a fast search algorithm using the motion vector 5 obtained through the linear interpolation as a search starting point;

**characterized in that** said apparatus being arranged to determine the search area of the fast search algorithm variably, with reference to motion vectors of neighboring blocks that are nearest to a given block, according to one of the following expressions:

$$SA = MAX\{ \mid fMV(a)-iMV(i,j) \mid , \mid fMV(b)-iMV(i,j) \mid , \mid fMV(c)-iMV(i,j) \mid , \mid fMV(d)-iMV(i,j) \mid \};$$

and

$$SA = MAX\{\ |\ iMV1\text{-}iMV(i,j)\ |\ ,\ |\ iMV2\text{-}iMV(i,j)\ |\ ,\ |\ iMV3\text{-}iMV(i,j)\ |\ ,$$
$$|\ iMV4\text{-}iMV(i,j)\ |\ \};$$

where SA indicates the search area, (i,j) are spatial coordinates of pixels, iMV(i,j) is a motion vector obtained through the linear interpolation in the block and fMV(a) through fMV(d) are motion vectors obtained by performing the full search algorithm on sampled ones of the neighboring blocks and iMV1 through iMV4 are motion vectors of neighboring blocks obtained through the linear interpolation.

8. Apparatus according to claim 7, comprising:

a frame buffer (910, 930) configured to store an input video on a frame-by-frame basis;
a motion estimation apparatus according to claim 9, configured to perform motion estimation for a current frame that is stored in the frame buffer (910, 930); and
a motion compensated interpolation unit (950) configured to generate pixel values to be interpolated between frames based on motion vectors estimated by the motion estimation apparatus.

**Patentansprüche**

1. Verfahren zur Bewegungsschätzung in einem Video-Kompressionssystem, wobei das Verfahren umfasst:

Aufteilen eines aktuellen Einzelbildes in eine Vielzahl von Blöcken und Durchführen eines Vollsuchalgorithmus an abgetasteten Blöcken der Vielzahl von Blöcken; und
Zuweisen eines über lineare Interpolation ermittelten Bewegungsvektors zu nicht abgetasteten Blöcken der Vielzahl von Blöcken in dem aktuellen Einzelbild auf Basis von über das Durchführen des Vollsuchalgorithmus ermittelten Bewegungsvektoren;
Durchführen eines Schnellsuchalgorithmus unter Verwendung des über die lineare Interpolation ermittelten Bewegungsvektors als einen Such-Anfangspunkt;
**dadurch gekennzeichnet, dass** ein Suchbereich des Schnellsuchalgorithmus unter Bezugnahme auf Bewegungsvektoren benachbarter Blöcke, die am nächsten an einem bestimmten Block liegen, gemäß einem der folgenden Ausdrücke variabel bestimmt wird:

$$SA = MAX\ \{\ |\ fMV(a) - iMV(i, j)\ |,\ |\ fMV(b) - iMV(i, j)\ |,\ |\ fMV(c) - iMV(i, j)\ |,\ |\ fMV(d) -$$
$$iMV(i, j)\ |\ \};$$

und

$$SA = MAX\ \{\ |\ iMV1 - iMV(i, j)\ |,\ |\ iMV2 - iMV(i, j)\ |,\ |\ iMV3 - iMV(i, j)\ |,\ |\ iMV4 - iMV(i, j)\ |\ \}$$

wobei SA den Suchbereich angibt, (i, j) räumliche Koordinaten von Pixeln sind, iMV(i, j) ein über die lineare Interpolation in dem Block ermittelter Bewegungsvektor ist, fMV(a) bis fMV(d) mittels Durchführen des Vollsuchalgorithmus an abgetasteten der benachbarten Blöcke ermittelte Bewegungsvektoren sind und iMV1 bis iMV4 über die lineare Interpolation ermittelte Bewegungsvektoren benachbarter Blöcke sind.

2. Verfahren nach Anspruch 1, wobei das Durchführen des Vollsuchalgorithmus Berechnen mittlerer absoluter Differenzen zwischen den abgetasteten Blöcken in dem aktuellen Einzelbild und Bezugsblöcken in einem Suchbereich eines Bezugs-Einzelbildes sowie Bestimmen von Koordinaten einer Position mit einer minimalen mittleren absoluten Differenz als einen Bewegungsvektor umfasst.

3. Verfahren nach Anspruch 1, wobei beim Durchführen des Vollsuchalgorithmus die abgetasteten Blöcke in dem aktuellen Einzelbild eine Größe von $M_1$ x $M_2$ Pixeln haben und Interpolationsblöcke mit einer Größe von $N_1$ x $N_2$

Pixeln überlappen, Pixel in den abgetasteten Blöcken von $M_1$ x $M_2$ Pixeln abgetastet werden und $M_1$ sowie $M_2$ größer sind als $N_1$ und $N_2$.

**4.** Verfahren nach Anspruch 1, wobei:

$$iMV = (1-\beta)[(1-\alpha)fMV_1 + \alpha fMV_2] + \beta[(1-\alpha)fMV_3 + \alpha fMV_4]$$

wobei iMV den über lineare Interpolation ermittelten Bewegungsvektor angibt, $fMV_{1-4}$ Bewegungsvektoren vier am nächsten liegender Blöcke angibt, die über ein Vollsuche ermittelt werden, und $\alpha$ und $\beta$ horizontale und vertikale rationale Konstanten zwischen dem über die lineare Interpolation ermittelten Bewegungsvektor und den über die Vollsuche ermittelten Bewegungsvektoren sind.

**5.** Verfahren nach Anspruch 1, wobei das Durchführen des Schnellsuchalgorithmus Suchen nach einem lokalen Minimum in einem Suchbereich eines Bezugs-Einzelbildes unter Verwendung des über die lineare Interpolation an einem Block in dem aktuellen Einzelbild ermittelten Bewegungsvektors als den Such-Anfangspunkt, Unterbrechen der Suche, wenn das lokale Minimum gefunden ist, und Festlegen des lokalen Minimums als einen Bewegungsvektor des Blocks in dem aktuellen Einzelbild umfasst.

**6.** Verfahren zum Umwandeln einer Bildwiederholrate, wobei das Verfahren umfasst:

ein Verfahren zur Bewegungsschätzung nach Anspruch 1; und
Erzeugen von Pixelwerten, die zwischen einem n-ten Einzelbild und einem (n-1)-ten Einzelbild auf Basis von Bewegungsvektoren zu interpolieren sind, die über den Schnellsuchalgorithmus geschätzt werden, und von Pixelwerten von Blöcken, die zwischen dem n-ten Einzelbild und dem (n-1)-ten Einzelbild abgeglichen werden.

**7.** Bewegungsschätzvorrichtung, die umfasst:

eine Einrichtung (942) zum Unterteilen eines aktuellen Einzelbildes in eine Vielzahl von Blöcken und zum Durchführen eines Vollsuchalgorithmus an abgetasteten Blöcken der Vielzahl von Blöcken; und
eine Einrichtung (946) zum Zuweisen eines über lineare Interpolation ermittelten Bewegungsvektors zu nicht abgetasteten Blöcken der Vielzahl von Blöcken in dem aktuellen Einzelbild auf Basis von über das Durchführen des Vollsuchalgorithmus ermittelten Bewegungsvektoren;
eine Einrichtung (948) zum Durchführen eines Schnellsuchalgorithmus unter Verwendung des über die lineare Interpolation gewonnenen Bewegungsvektors als einen Such-Anfangspunkt;
**dadurch gekennzeichnet, dass** die Vorrichtung so eingerichtet ist, dass sie den Suchbereich des Schnellsuchalgorithmus unter Bezugnahme auf Bewegungsvektoren benachbarter Blöcke, die am nächsten an einem bestimmten Block liegen, gemäß einem der folgenden Ausdrücke variabel bestimmt:

$$SA = MAX \{ | fMV(a) - iMV(i, j) |, | fMV(b) - iMV(i, j) |, | fMV(c) - iMV(i, j) |, | fMV(d) - iMV(i, j) | \};$$

u

und

$$SA = MAX \{ | iMV1 - iMV(i, j) |, | iMV2 - iMV(i, j) |, | iMV3 - iMV(i, j) |, | iMV4 - iMV(i, j) | \}$$

wobei SA den Suchbereich angibt, (i, j) räumliche Koordinaten von Pixeln sind, iMV(i, j) ein über die lineare Interpolation in dem Block ermittelter Bewegungsvektor ist, fMV(a) bis fMV(d) mittels Durchführen des Vollsuchalgorithmus an abgetasteten der benachbarten Blöcke ermittelte Bewegungsvektoren sind und iMV1 bis iMV4 über die lineare Interpolation ermittelte Bewegungsvektoren benachbarter Blöcke sind.

**8.** Vorrichtung nach Anspruch 7, die umfasst:

einen Einzelbild-Puffer (910, 930), der so konfiguriert ist, dass er Eingangs-Video Einzelbild für Einzelbild speichert;
eine Bewegungsschätzvorrichtung nach Anspruch 9, die so konfiguriert ist, dass sie Bewegungsschätzung für ein aktuelles Einzelbild durchführt, das in dem Frame-Puffer (910, 930) gespeichert ist; und
eine bewegungskompensierte Interpolationseinheit (950), die so konfiguriert ist, dass sie Pixelwerte erzeugt, die zwischen Einzelbildern auf Basis von durch die Bewegungsschätzvorrichtung geschätzten Bewegungsvektoren zu interpolieren sind.

## Revendications

1. Procédé d'estimation de mouvement dans un système de compression vidéo, le procédé comprenant les étapes consistant à :

diviser une trame actuelle en une pluralité de blocs et exécuter un algorithme de recherche complète sur des blocs échantillonnés de la pluralité de blocs ; et
attribuer un vecteur de mouvement obtenu par interpolation linéaire à des blocs non échantillonnés de la pluralité de blocs dans la trame actuelle sur la base de vecteurs de mouvement obtenus par l'exécution de l'algorithme de recherche complète ;
exécuter un algorithme de recherche rapide en utilisant le vecteur de mouvement obtenu par l'interpolation linéaire en tant que point de début de recherche ;
**caractérisé en ce qu'**une zone de recherche pour l'algorithme de recherche rapide est déterminée de manière variable avec référence aux vecteurs de mouvement des blocs voisins qui sont les plus proches d'un bloc donné conformément à l'une des expressions suivantes :

$$SA = MAX\{|fMV(a)-iMV(i,j)|, \ |fMV(b)-iMV(i,j)|,$$
$$|fMV(c)-iMV(i,j)|, \ |fMV(d)-iMV(i,j)|\} \ ;$$

et

$$SA = MAX\{|iMV1-iMV(i,j)|, \ |iMV2-iMV(i,j)|,$$
$$|iMV3-iMV(i,j)|, \ |iMV4-iMV(i,j)|\}$$

où SA indique la zone de recherche, (i,j) sont des coordonnées spatiales de pixels, iMV(i,j) est un vecteur de mouvement obtenu par l'interpolation linéaire dans le bloc et fMV(a) à fMV(d) sont des vecteurs de mouvement obtenus en exécutant l'algorithme de recherche complète sur des blocs échantillonnés parmi les blocs voisins et iMV1 à iMV4 sont des vecteurs de mouvement de blocs voisins obtenus par l'interpolation linéaire.

2. Procédé selon la revendication 1, dans lequel l'exécution de l'algorithme de recherche complète comprend le calcul de différences absolues moyennes entre les blocs échantillonnés dans la trame actuelle et des blocs de référence dans une zone de recherche d'une trame de référence et la détermination des coordonnées d'un emplacement ayant un MAX minimum en tant que vecteur de mouvement.

3. Procédé selon la revendication 1, dans lequel, dans l'exécution de l'algorithme de recherche complète, les blocs échantillonnés dans la trame actuelle ont une taille de $M_1$ x $M_2$ pixels et chevauchent les blocs d'interpolation ayant une taille de $N_1$ x $N_2$ pixels, les pixels dans les blocs échantillonnés de $M_1$ x $M_2$ pixels sont échantillonnés, et $M_1$ et $M_2$ sont plus grands que $N_1$ et $N_2$.

4. Procédé selon la revendication 1, dans lequel :

$$iMV = (1-\beta)[(1-\alpha)fMV_1 + \alpha fMV_2]+\beta[(1-\alpha)fMV_3 + \alpha fMV_4]$$

où iMV indique le vecteur de mouvement obtenu par interpolation linaire, $fMV_{1-4}$ indique les vecteurs de mouvement des quatre blocs les plus proches qui sont obtenus par une recherche complète, $\alpha$ et $\beta$ sont des constantes rationnelles horizontale et verticale entre le vecteur de mouvement obtenu par l'interpolation linéaire et les vecteurs de mouvement obtenus par la recherche complète.

5. Procédé selon la revendication 1, dans lequel l'exécution de l'algorithme de recherche rapide comprend la recherche d'un point minimum local dans une zone de recherche d'une trame de référence en utilisant le vecteur de mouvement obtenu par l'interpolation linéaire sur un bloc dans la trame actuelle en tant que point de début de recherche, l'arrêt de la recherche si le point minimum local est trouvé, et la détermination du point minimum local en tant que vecteur de mouvement du bloc dans la trame actuelle.

6. Procédé pour convertir un débit de trame, le procédé comprenant :

   un procédé d'estimation de mouvement selon la revendication 1 ; et
   la génération de valeurs de pixels à interpoler entre une n-ième trame et une (n-1)-ième trame sur la base de vecteurs de mouvement qui sont estimés par l'algorithme de recherche rapide et de valeurs de pixels de blocs qui sont mis en correspondance entre la n-ième trame et la (n-1)-ième trame.

7. Dispositif d'estimation de mouvement comprenant :

   des moyens (942) pour diviser une trame actuelle en une pluralité de blocs et exécuter un algorithme de recherche complète sur des blocs échantillonnés de la pluralité de blocs ; et
   des moyens (946) pour attribuer un vecteur de mouvement obtenu par interpolation linéaire à des blocs non échantillonnés de la pluralité de blocs dans la trame actuelle sur la base de vecteurs de mouvement obtenus par l'exécution de l'algorithme de recherche complète ;
   des moyens (948) pour exécuter un algorithme de recherche rapide en utilisant le vecteur de mouvement obtenu par l'interpolation linéaire en tant que point de début de recherche ;
   **caractérisé en ce que** ledit dispositif est agencé pour déterminer la zone de recherche de l'algorithme de recherche rapide de manière variable, avec référence aux vecteurs de mouvement des blocs voisins qui sont les plus proches d'un bloc donné, conformément à l'une des expressions suivantes :

$$SA = MAX\{|fMV(a)-iMV(i,j)|, |fMV(b)-iMV(i,j)|,$$
$$|fMV(c)-iMV(i,j)|, |fMV(d)-iMV(i,j)|\} ;$$

   et

$$SA = MAX\{|iMV1-iMV(i,j)|, |iMV2-iMV(i,j)|,$$
$$|iMV3-iMV(i,j)|, |iMV4-iMV(i,j)|\}$$

   où SA indique la zone de recherche, (i,j) sont des coordonnées spatiales de pixels, iMV(i,j) est un vecteur de mouvement obtenu par l'interpolation linéaire dans le bloc et fMV(a) à fMV(d) sont des vecteurs de mouvement obtenus en exécutant l'algorithme de recherche complète sur des blocs échantillonnés parmi les blocs voisins et iMV1 à iMV4 sont des vecteurs de mouvement de blocs voisins obtenus par l'interpolation linéaire.

8. Dispositif selon la revendication 7, comprenant :

une mémoire tampon de trame (910, 930) configurée pour mémoriser une vidéo entrée sur une base trame par trame ;

un dispositif d'estimation de mouvement selon la revendication 9, configuré pour effectuer une estimation de mouvement pour une trame actuelle qui est mémorisée dans la mémoire tampon de trame (910, 930) ; et

une unité d'interpolation à mouvement compensé (950) configurée pour générer des valeurs de pixels à interpoler entre des trames sur la base de vecteurs de mouvement estimés par le dispositif d'estimation de mouvement.

# FIG. 1

```
        ( END )
           │
           ▼
┌──────────────────────┐
│  DIVIDE CURRENT FRAME │──── 110
│    INTO BLOCKS        │
└──────────────────────┘
           │
           ▼
┌──────────────────────┐
│ EXTRACT MOTION VECTORS (fMV) │
│ BY PERFORMING FULL SEARCH    │
│ ALGORITHM ON SAMPLED BLOCKS  │──── 120
│ AMONG BLOCKS IN CURRENT FRAME│
│ USING OVERLAPPING BLOCKS     │
└──────────────────────┘
           │
           ▼
┌──────────────────────┐
│ ALLOCATE MOTION VECTOR (iMV) │
│ OBTAINED THROUGH LINEAR      │
│ INTERPOLATION TO NON-SAMPLED │──── 130
│ BLOCKS IN CURRENT FRAME      │
└──────────────────────┘
           │
           ▼
┌──────────────────────┐
│ PERFORM FULL SEARCH          │
│ ALGORITHM USING ALLOCATED    │
│ MOTION VECTOR (iMV)          │──── 140
│ AS SEARCH STARTING POINT     │
└──────────────────────┘
           │
           ▼
        ( END )
```

# FIG. 2

CURRENT FRAME

REFERENCE FRAME

SEARCH
AREA

SAMPLED BLOCK

NON-SAMPLED BLOCK

# FIG. 3

ME BLOCK ($M_1 \times M_2$)
MCI BLOCK ($N_1 \times N_2$)

CURRENT FRAME

REFERENCE FRAME

# FIG. 4A

# FIG. 4B

M₁

M₂

ME BLOCK

⬛ SELECTED PIXEL

⬜ NON-SELECTED PIXEL

N₁

N₂

MCI BLOCK

# FIG. 5

SAMPLED MOTION VECTOR
FIELD BY FULL-SEARCH
ESTIMATION

MV FIELD
SCALING BY
BILINEAR
INTERPOLATION

SAMPLED MOTION VECTOR
FIELD BY FULL-SEARCH
ESTIMATION

| fMV | fMV | fMV |
|-----|-----|-----|
| fMV | fMV | fMV |
| fMV | fMV | fMV |

| fMV | iMV | iMV | fMV | iMV | iMV | fMV | iMV |
|-----|-----|-----|-----|-----|-----|-----|-----|
| iMV | iMV | iMV | iMV | iMV | iMV | iMV | iMV |
| iMV | iMV | iMV | iMV | iMV | iMV | iMV | iMV |
| fMV | iMV | iMV | fMV | iMV | iMV | fMV | iMV |
| iMV | iMV | iMV | iMV | iMV | iMV | iMV | iMV |
| iMV | iMV | iMV | iMV | iMV | iMV | iMV | iMV |
| fMV | iMV | iMV | fMV | iMV | iMV | fMV | iMV |
| iMV | iMV | iMV | iMV | iMV | iMV | iMV | iMV |

fMV : MV FROM FULL SEARCH METHOD
iMV : MV FORM BILINEAR INTERPOLATION

# FIG. 6

BLOCK WHICH MV
IS OBTAINED BY
MODIFIED FSBMA

BLOCK WHICH MV
IS OBTAINED BY
BILINEAR INTERPOLATION

# FIG. 7

| fMV(a) | iMV | iMV | fMV(b) |
|--------|--------|--------|--------|
| iMV2 | iMV3 | iMV4 | iMV |
| iMV1 | iMV(i,j) | iMV | iMV |
| fMV(c) | iMV | iMV | fMV(d) |

# FIG. 8

CURRENT FRAME

REFERENCE FRAME

ME BY FAST
SEARCH
ALGORITHM
START POSITION
IS iMV

TARGET BLOCK FOR
FAST SEARCH (DS, TSS, ...)

# FIG. 9

INPUT VIDEO SIGNAL

FIRST FRAME BUFFER — 910

CURRENT FRAME

MCI UNIT — 950

FRAME DELAY UNIT — 920

SECOND FRAME BUFFER — 930

PREVIOUS FRAME

— 940

BLOCK SAMPLING UNIT — 942

FULL SEARCH ALGORITHM UNIT — 944

fMVs

MOTION VECTOR ALLOCATION UNIT — 946

fMVs

FAST SEARCH ALGORITHM UNIT — 948

EP 1 638 339 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2844131

**Non-patent literature cited in the description**

- **LIU, B. ; ZACCARIN.** New Fast algorithms for the Estimation of Block Motion Vectors. *I.E.E.E. Transactiosns on Circuits & Systems for Video Technology,* 1993, vol. 3 (2), 148-157

- **MOSCHETTI, F. et al.** A Statistical Adaptive Block-Matching Motion Estimation. *I.E.E.E. Transactiosns on Circuits & Systems for Video Technology,* 2003, vol. 13 (4), 417-431